(19) Europäisches Patentamt
European Patent Office
Office européen des brevets

(11) **EP 2 119 063 B1**

(12) **FASCICULE DE BREVET EUROPEEN**

(45) Date de publication et mention de la délivrance du brevet:
**22.02.2012 Bulletin 2012/08**

(21) Numéro de dépôt: **08762157.9**

(22) Date de dépôt: **26.02.2008**

(51) Int Cl.:
**H04B 17/00** $^{(2006.01)}$

(86) Numéro de dépôt international:
**PCT/FR2008/050316**

(87) Numéro de publication internationale:
**WO 2008/113958 (25.09.2008 Gazette 2008/39)**

(54) **PROCEDE DE DETERMINATION DE LA PRESENCE D'UN SIGNAL DE TELECOMMUNICATIONS SUR UNE BANDE DE FREQUENCES**

VERFAHREN ZUR BESTIMMUNG DES VORHANDENSEINS EINES TELEKOMMUNIKATIONSSIGNALS AUF EINEM FREQUENZBAND

METHOD FOR DETERMINING THE PRESENCE OF A TELECOMMUNICATION SIGNAL ON A FREQUENCY BAND

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.02.2007 FR 0753557**

(43) Date de publication de la demande:
**18.11.2009 Bulletin 2009/47**

(73) Titulaire: **FRANCE TELECOM**
**75015 Paris (FR)**

(72) Inventeurs:
• **GHOZZI, Mohamed**
  **F-13003 Marseille (FR)**
• **DOHLER, Michaël**
  **E-08024 Barcelona (ES)**

(74) Mandataire: **Benetiere, Marion**
**France Telecom**
**R&D/PIV/Brevets**
**38-40, rue du Général Leclerc**
**92794 Issy les Moulineaux cedex 09 (FR)**

(56) Documents cités:
| EP-A2- 0 413 361 | WO-A-02/11378 |
| WO-A-94/16342 | WO-A-98/53630 |
| US-A1- 2004 190 663 | |

**Description**

La présente invention se situe dans le domaine de la radio cognitive et concerne plus particulièrement la détermination de la présence d'un signal de télécommunications sur une bande de fréquences.

En l'absence de signal, la bande de fréquences est considérée comme libre. Dans le cas contraire, elle est considérée comme occupée.

Avec le développement des télécommunications, l'optimisation de l'utilisation du spectre radio devient une préoccupation de plus en plus importante pour les opérateurs de télécommunications.

En effet, le nombre d'applications utilisant le spectre radio croît et de nombreuses nouvelles applications sont également de plus en plus consommatrices de fréquences comme par exemple l'UMTS (pour Universal Mobile Telecommunications System en anglais) et le Wifi.

Par ailleurs, une étude menée en novembre 2002 par la FCC (pour Federal Communications Commission en anglais) a mis en évidence le fait que le spectre radio n'est pas utilisé efficacement. Ainsi, à un instant donné et pour un lieu géographique donné, il y a une grande probabilité de trouver des bandes de fréquences libres dans le spectre radio.

L'accès au spectre radio pour la fourniture de services nécessite de bénéficier d'une licence. Cependant, la FCC a récemment autorisé l'accès libre, c'est-à-dire sans licence, à celles des bandes de fréquences libres dont l'utilisation est normalement destinée à la télévision. L'accès à ces bandes de fréquences libres particulières doit se faire à partir de systèmes radio aptes à mettre en oeuvre les principes du domaine de la radio cognitive, c'est-à-dire être capables de collecter certains paramètres sur leur environnement de manière notamment à détecter des bandes de fréquences libres.

Par conséquent, l'optimisation de l'utilisation du spectre radio passe par la détection de bandes de fréquences libres.

Plusieurs solutions ont déjà été proposées pour la détection de bandes de fréquences libres.

Certaines de ces solutions sont basées sur la géo-localisation. La position d'un terminal qui embarque une fonction GPS (pour Global Positioning System en anglais) est donnée par satellite. Le terminal accède à des bases de données qui, en fonction de sa position, lui fournissent l'état du spectre radio. Certains terminaux peuvent être préprogrammés et embarquer directement des bases de données. L'inconvénient de ce type de solutions est qu'elles sont contraignantes et d'utilisation limitée. En effet, le terminal doit pouvoir déterminer sa position géographique et interroger une base de données ou bien être utilisé dans une zone géographique prédéterminée correspondant à la base de données embarquée.

Le document EP-A-2 0413 361décrit un dispositif détectant la présence d'un signal, la voix, au moyen des composantes du vecteur énergie. Les composantes sont intégrées, et une grandeur en ait déduite et comparée à une valeur de seuil. Par ailleurs des valeurs statistiques sont utilisées, les calculs effectués étant équivalent à une autocorrélation.

Le document US2004/190663 montre l'utilisation d'un corrélateur pour détecter la présence d'un signal.

Le document WO02/11378 quant à lui divulgue un premier vecteur représentatif d'une autocorrélation d'un signal utile dans une première bande de fréquence ainsi qu'un second vecteur représentatif d'une corrélation du signal utile avec une perturbation issue d'au moins un canal situé dans une seconde bande de fréquence adjacente à la première bande.

D'autres solutions telles que la détection radiométrique (ou énergétique) se basent sur la détection d'un signal dans le bruit sur une bande de fréquences radio. Ces techniques consistent à mesurer l'énergie du signal. Si l'énergie est supérieure à un certain seuil prédéterminé tenant compte du niveau de bruit alors on en déduit qu'un signal de télécommunications est présent sur la bande de fréquences considérée. Ces solutions présentent l'inconvénient de devoir disposer d'une connaissance a priori sur le niveau de bruit.

Un autre type de solutions de détection d'un signal sur une bande de fréquences radio se fonde sur la mise en évidence du caractère cyclostationnaire des signaux de télécommunications. Les signaux cyclostationnaires possèdent des statistiques (moyenne et autocorrélation) dépendantes du temps et périodiques dans le temps. La fréquence de la fonction d'autocorrélation d'un signal cyclostationnaire est cyclique. Le bruit est quant à lui modélisé comme un signal stationnaire dont les statistiques sont indépendantes du temps. La distinction entre un signal de télécommunications et du bruit s'effectue par application d'un test de fréquences cycliques. Si le caractère cyclique de la fréquence de la fonction d'autocorrélation du signal reçu est mis en évidence alors on peut conclure qu'un signal de télécommunications est présent sur la bande de fréquences considérée. L'inconvénient des solutions existantes reposant sur le caractère cyclostationnaire des signaux de télécommunications est de ne pouvoir détecter qu'une seule fréquence cyclique à la fois. Ces solutions présentent également l'inconvénient de nécessiter une connaissance a priori des fréquences cycliques des signaux qui peuvent apparaître sur la bande de fréquences considérée.

L'inconvénient des solutions existantes est qu'elles ne permettent pas la détection sur une bande de fréquences donnée d'un signal de télécommunications sans avoir quelques connaissances a priori soit sur ce signal soit sur le bruit.

Il existe donc un besoin d'une technique permettant de détecter un éventuel signal de télécommunications sur une bande de fréquences donnée sans connaissance a priori de ce signal.

A cet effet, l'invention a pour objet un procédé de détermination de la présence d'un signal de télécommunications sur une bande de fréquences, ledit signal étant supposé cyclostationnaire, caractérisé en ce qu'il comporte :

- une étape de détermination d'un vecteur d'énergie $T$ comportant $m$ composantes respectivement représentatives de valeurs d'énergie d'une fonction d'autocorrélation du signal reçu sur ladite bande de fréquences pour m temps de décalage,
- une étape de calcul d'éléments de corrélation entre les $m$ composantes du vecteur d'énergie $\hat{T}$,
- une étape de réalisation d'un calcul statistique sur les éléments de corrélation calculés afin de déterminer un indicateur statistique $\ell$,
- une étape de comparaison de l'indicateur statistique obtenu $\ell$ avec un seuil prédéterminé dans le but de déterminer la présence d'un signal de télécommunications sur ladite bande de fréquences.

En définitive, le procédé de détermination de la présence d'un signal de télécommunications sur une bande de fréquences de l'invention consiste à tester si la fonction d'autocorrélation du signal présente ou non une quantité d'énergie significative sur la bande de fréquences étudiée.

L'invention présente l'avantage de permettre la détection d'un ou plusieurs signaux de télécommunications quelconques, autres que le bruit, sur une bande de fréquences.

Ce procédé a également pour avantages de ne pas nécessiter de connaissance a priori du signal et de permettre de tester toute la bande de fréquences en une seule opération.

Selon un mode de réalisation préféré, l'étape de détermination du vecteur d'énergie T comporte au moins une sous-étape de calcul d'un premier vecteur à $m$ composantes $Y(n)$, une composante d'ordre $n$ du vecteur résultant du produit de la valeur du signal reçu à un instant donné $n$ avec la valeur du signal reçu à un instant décalé $n + \tau$.

Le test utilisé pour déterminer la présence d'un signal de télécommunications sur une bande de fréquences repose sur le seul caractère cyclostationnaire des signaux de télécommunications et les propriétés qui en découlent. En particulier, un signal cyclostationnaire possède des statistiques (moyenne et autocorrélation) fonction du temps et périodiques dans le temps. Pour mettre en évidence le caractère cyclostationnaire du signal reçu, on recueille N échantillons du signal correspondant chacun à un instant donné n et les échantillons du même signal décalé dans le temps.

Un des avantages de l'invention est que l'algorithme utilisé ne nécessite qu'un nombre limité de données du signal.

Selon une caractéristique préférée, l'étape de détermination du vecteur d'énergie $\hat{T}$ comporte au moins

- une sous-étape de détermination d'une fonction de filtrage $h(n)$ dont les coefficients sont obtenus à partir de fréquences $\alpha$ min et $\alpha$ max prédéterminées;
- une sous-étape de calcul d'un second vecteur $Z(n)$ à $m$ composantes résultant du produit de convolution de la fonction de filtrage $h(n)$ avec le premier vecteur $Y(n)$.

Plusieurs signaux de télécommunications différents peuvent être véhiculés sur une même bande de fréquences, ces signaux ayant des fréquences cycliques différentes. Le choix des caractéristiques du filtre appliqué au signal reçu permet de détecter n'importe quel signal de télécommunications et d'étudier toute ou partie de la bande de fréquences.

Ainsi, un des avantages de l'invention est de permettre la détection en aveugle de n'importe quel signal présent sur la bande de fréquences. Un autre avantage est de pouvoir étudier toute la bande de fréquences en une seule fois ou de limiter la largeur de la bande étudiée.

Selon une caractéristique préférée, les $m$ composantes du vecteur $\hat{T}$ sont fonction de la somme pour toutes les valeurs de $n$ du produit de la valeur de la composante du vecteur $Y(n)$ à l'instant $n$ avec la valeur de la composante du vecteur $Z(n)$ au même instant $n$.

Les composantes du vecteur d'énergie résultent de calculs simples appliqués aux échantillons recueillis du signal.

L'invention présente un algorithme de calcul simple et présente l'avantage de ne nécessiter qu'une seule analyse du signal.

Selon un mode de réalisation préféré, l'étape de calcul des éléments de corrélation entre les $m$ composantes du vecteur d'énergie $\hat{T}$ s'effectue par la détermination d'une matrice de covariance $Q$ dont les éléments correspondent à la covariance entre chacune des composantes du vecteur d'énergie $\hat{T}$ prises deux à deux.

L'invention a pour avantage de mettre en oeuvre un algorithme de calcul simple sur un nombre limité de données permettant ainsi de limiter le temps de calcul nécessaire à l'obtention d'un résultat.

Selon une caractéristique préférée, l'indicateur statistique $\ell$ est obtenu à partir du vecteur d'énergie $\hat{T}$ et de la matrice de covariance Q.

Dans un mode de réalisation particulier, l'indicateur statistique $\ell$ résulte du produit du vecteur d'énergie $\hat{T}$ par

l'inverse de la matrice de covariance Q et par la transposée du vecteur $\hat{T}$.

Avantageusement, l'indicateur statistique ($\ell$) suit une loi dite chi-deux ($\chi^2$).

Selon une caractéristique préférée, le seuil auquel l'indicateur statistique est comparé est déterminé à partir de la loi de chi-deux $\chi^2$ centrée.

L'invention a également pour objet un dispositif de détermination de la présence d'un signal de télécommunications sur une bande de fréquences, ledit signal étant supposé cyclostationnaire, caractérisé en ce qu'il comporte :

- un module de traitement adapté pour déterminer un vecteur d'énergie $\hat{T}$ comportant $m$ composantes respectivement représentatives de valeurs d'énergie d'une fonction d'autocorrélation du signal reçu sur ladite bande de fréquences pour $m$ temps de décalage,
- une unité de calcul d'éléments de corrélation entre les $m$ composantes du vecteur d'énergie $\hat{T}$,
- une unité de calcul statistique sur les éléments de corrélation calculés afin de déterminer un indicateur statistique $\ell$,
- un module de comparaison de l'indicateur statistique obtenu $\ell$ avec un seuil prédéterminé dans le but de déterminer la présence d'un signal de télécommunications sur ladite bande de fréquences.

L'invention porte également sur un équipement de communication à travers un réseau comprenant un dispositif de détermination de la présence d'un signal de télécommunications sur une bande de fréquences, ledit signal étant supposé cyclostationnaire, selon le procédé décrit ci-dessus.

L'invention a également pour objet un programme d'ordinateur comportant des instructions pour mettre en oeuvre le procédé décrit précédemment lorsque le programme est exécuté par un ordinateur.

L'invention sera mieux comprise à la lumière de la description qui suit d'un mode particulier de réalisation du procédé selon l'invention de détermination de la présence d'un signal de télécommunications sur une bande de fréquences et d'un dispositif correspondant, en référence aux dessins annexés sur lesquels :

- la figure 1 représente un organigramme du procédé de l'invention selon le mode de réalisation particulier décrit,
- la figure 2 représente le dispositif apte à mettre en oeuvre le procédé de la figure 1.

L'invention repose sur les propriétés d'un signal de télécommunications, celui-ci pouvant être modélisé comme un signal cyclostationnaire. En particulier, un signal cyclostationnaire présente des statistiques (moyenne et autocorrélation) dépendantes du temps et périodiques dans le temps. La fréquence associée à cette périodicité est appelée fréquence cyclique.

Soit un signal radio reçu et échantillonné $r(n)$, $n$ représentant l'indice de l'instant de l'échantillonnage considéré. Ce signal $r(n)$ est composé du bruit $b(n)$ et d'au moins un signal de télécommunications cyclostationnaire $s(n)$ que l'on cherche à détecter et dont la fréquence cyclique n'est pas connue tel que :

$$r(n) = s(n) + b(n).$$

Alors, le signal radio reçu $r(n)$ est aussi lui-même cyclostationnaire.

Selon les propriétés des signaux cyclostationnaires, les statistiques réalisées à partir d'échantillons de signal $r(n)$ (c'est-à-dire les fonctions appliquées aux échantillons de signal) d'ordre inférieur ou égal à deux, par exemple la moyenne et l'autocorrélation, fournissent des résultats dépendant du temps et périodiques dans le temps.

Ainsi une statistique d'ordre un réalisée à partir d'échantillons de signal telle que la moyenne $m_r$ est identique pour deux instants décalés d'une période cyclique $N_0$, soit :

$$m_r(n) = m_r(n + N_0) \qquad \text{avec} \qquad m_r(n) = E\{r(n)\}$$

où :

- $E$ est l'opérateur espérance mathématique,
- $N_0$ est la période cyclique du signal de valeur égale à l'inverse de la fréquence cyclique de ce signal.

De même, une statistique d'ordre deux telle que la fonction d'autocorrélation $R_r$ du signal est identique pour deux instants décalés d'une période cyclique $N_0$, soit :

$$R_r(n,\tau) = R_r(n+N_0,\tau) \qquad \text{avec} \quad R_r(n,\tau) = E\{r(n).r(n+\tau)\}$$

où :

- $E$ est l'opérateur espérance mathématique,
- $N_0$ est la période cyclique du signal,
- $\tau$ est un temps de décalage par rapport à l'instant $n$ correspondant à la valeur du signal $r(n)$.

Soit à présent $S(\tau)$ l'énergie de la fonction d'autocorrélation du signal $r(n)$ :

$$S(\tau) = \sum_{\alpha \neq 0} \left| R^\alpha(\tau) \right|^2$$

avec

$$R_r(n,\tau) = \sum_k R_r^{k/N_0}(\tau) e^{j2\pi \frac{k}{N_0} n}$$

et

$$R_r^\alpha(\tau) = \frac{1}{N_0} \sum_{l=0}^{N_0-1} R_r(l,\tau).e^{-j2\pi(l.Te).\alpha}$$

où :

- $T_e$ est la période d'échantillonnage du signal,
- $N_0$ est la période cyclique du signal
- $\tau$ est un temps de décalage par rapport à l'instant $n$ correspondant à la valeur du signal $r(n)$.

Si un signal de télécommunications est présent, il existe une fréquence $\alpha_0$ inconnue mais non nulle telle que $R_r^\alpha(\tau)$ est non nul pour certaines valeurs du retard $\tau$.

La mise en oeuvre de l'invention consiste à calculer l'énergie $S(\tau)$ sur un ensemble de valeurs du retard $\tau$. Si $S(\tau)$ est nulle pour toutes les valeurs de $\tau$ alors on considère que la bande de fréquences testée est libre. Dans le cas contraire, c'est-à-dire si $S(\tau)$ est non nul pour au moins une valeur de $\tau$, on considère que la bande de fréquences testée est occupée.

Etant donné que $S(\tau)$ est une somme de termes au carré, on ne peut pas lui trouver une estimation qui soit nulle lorsque la bande est libre et non nulle lorsque la bande est occupée. Pour cela, on estime une quantité équivalente $T(\tau) = \gamma S(\tau)$ qui traduit le comportement de $S(\tau)$.

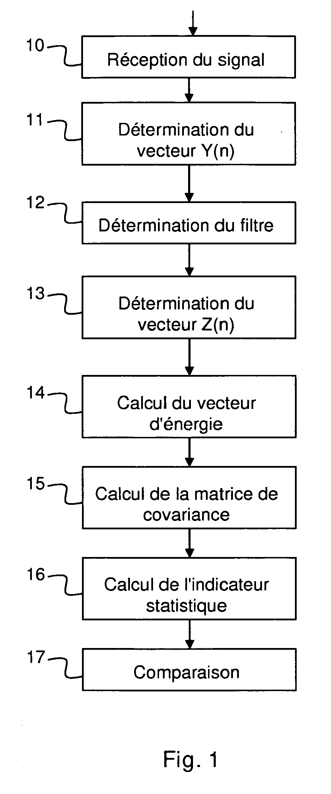

En référence à la figure 1, on décrit ci-après le procédé de l'invention dans une application particulière à un terminal apte à mettre en oeuvre les principes du domaine de la radio cognitive. En fonctionnement, pour transmettre et/ou recevoir des signaux dans un réseau de télécommunications, le terminal considéré détermine si une bande de fréquences est libre en détectant la présence ou non d'un signal de télécommunications sur cette bande de fréquences. Le terminal ne dispose d'aucune connaissance a priori sur le signal de télécommunications qui pourrait être présent sur la bande de fréquences étudiée. La présence d'un signal de télécommunications est mise en évidence par calcul d'un indicateur statistique sur l'estimation de l'énergie de la fonction d'autocorrélation du signal.

Dans une première phase, on recueille les données relatives au signal reçu sur une bande de fréquences $B$ pour laquelle on souhaite déterminer si elle est libre ou occupée.

A l'étape 10, le signal $r(t)$ reçu sur l'intervalle de temps *[0, N-1]* est échantillonné et l'on obtient $N$ échantillons $r(n)$ correspondant chacun à un instant $n$.

Le principe de l'invention reposant sur les propriétés des signaux cyclostationnaires (statistiques dépendantes du temps et périodiques dans le temps), on recueille également les valeurs $r(n + \tau)$ pour $m$ temps de décalage $\tau$ par rapport à l'instant $n$.

A l'étape 11, on détermine un premier vecteur instantané $Y(n)$ à l'instant $n$, pour $n$ appartenant à l'intervalle *[0, N-1]*, comportant m composantes $y_\tau(n)$ correspondant respectivement aux $m$ temps de décalage $\tau$. Chaque composante $y_\tau$(n) de *Y(n)*, avec $\tau_l$ variant de $\tau_l$, à $\tau_m$, est définie par :

$$y_\tau(n) = r(n).r(n + \tau)$$

Si la bande de fréquences $B$ étudiée est occupée, elle supporte au moins un signal *r(n)* cyclostationnaire dont la fonction d'autocorrélation comporte une ou plusieurs fréquences cycliques. Dans le contexte de l'invention, à savoir sans aucune connaissance a priori du signal, le terminal ignore totalement les valeurs de ces fréquences cycliques. Néanmoins, il est capable de les situer entre une valeur minimale $\alpha_{min}$ et une valeur maximale $\alpha_{max}$, ces deux valeurs dépendant des applications qui peuvent être supportées par la bande de fréquences considérée. Les valeurs $\alpha_{min}$ et $\alpha_{max}$ sont choisies de telle sorte que n'importe quel signal de télécommunications présent sur la bande de fréquences étudiée puisse être détecté. Soit par exemple la bande UHF (pour Ultra High Frequency en anglais) comprise entre 470 et 862 MHz, elle est utilisée pour la diffusion de la télévision analogique terrestre et la diffusion de la télévision numérique terrestre. Elle peut supporter des signaux de télévision analogique et des signaux de télévision numérique. Sur cette bande de fréquences, le signal de télévision analogique n'a qu'une seule fréquence cyclique qui est de 15625 Hz. Le signal de télévision numérique peut avoir différentes fréquences cycliques en fonction de la configuration ; la configuration incluant entre autres la largeur du canal de télévision. Par exemple, pour une configuration donnée, le signal de télévision numérique peut avoir l'une des 4 fréquences cycliques suivantes : 3571 Hz, 3968 Hz, 4201 Hz, 4329 Hz. Afin de détecter indifféremment l'un ou l'autre des signaux présents sur la bande de fréquences, les valeurs $\alpha_{min}$ et $\alpha_{max}$ sont choisies de telle sorte que par exemple $\alpha_{min}$ = 2000 Hz et $\alpha_{max}$ = 17000 Hz.

Ainsi, pour détecter n'importe quel signal de télécommunications présent sur la bande de fréquences, on spécifie à l'étape 12, un filtre $h(n)$ tel que sa transformée de Fourier $H(\alpha)$ ait un module et une phase définis par :

- si $\alpha \notin [\alpha_{min}, \alpha_{max}]$ alors $|H(\alpha)| = 0$ et $\arg[H(\alpha)]$ est quelconque,

- si $\alpha \in \left[\alpha_{\min}, \alpha_{\max}\right]$ alors $\left|H(\alpha)\right| = 1$ et $\left|\arg\left[H(\alpha)\right]\right| = \left(1 + \left(-1\right)^{\text{int}\left(\frac{\alpha - \alpha_{\min}}{\delta\alpha}\right)}\right).\frac{\pi}{2}$ où :

- $|\cdot|$ est l'opération module,
- arg ( ) fournit la phase de son argument,
- int ( ) fournit l'entier le plus proche de son argument,
- $\delta\alpha$ est le pas d'échantillonnage en fréquentiel,
- $\alpha_{min}$ est strictement positif.

Ensuite, on détermine à l'étape 13 un second vecteur instantané $Z(n)$ à l'instant $n$, pour $n$ appartenant à l'intervalle *[0, N-1]*, comportant m composantes $z_\tau$(n) correspondant respectivement aux $m$ temps de décalage $\tau$. Chaque composante $z_\tau$(n) de *Z(n)*, avec $\tau$ variant de $\tau_l$ à $\tau_m$, est définie par :

$$z_\tau(n) = h(n) \otimes y_\tau(n)$$

où :

- $\otimes$ est l'opérateur de convolution.

Dans une seconde phase, les données recueillies précédemment permettent de déterminer lors de l'étape 14 le vecteur $\hat{T}$ estimateur de la quantité $T(\tau)$ qui traduit le comportement de l'énergie de la fonction d'autocorrélation du signal $S(\tau)$ tel que :

$$\hat{T} = \left[ \hat{T}(\tau_1), \ldots, \hat{T}(\tau_m) \right]$$

avec

$$\hat{T}(\tau) = \frac{1}{N^2} \sum_{n=0}^{N-1} y_\tau(n).z_\tau(n).$$

où :

- $\tau_i$ avec $1 \leq i \leq m$ représente différents temps de décalage par rapport à l'instant $n$ correspondant à la valeur du signal $r(n)$
- N correspond au nombre d'échantillons du signal.

Si un signal de télécommunications est présent sur la bande de fréquences, il existe au moins une valeur de $\tau_i$ pour laquelle l'énergie $S(\tau)$ de la fonction d'autocorrélation du signal est non nulle.

Si on applique cette hypothèse au vecteur $\hat{T}$, estimateur du comportement de l'énergie de la fonction d'autocorrélation du signal et dont les différentes composantes sont aléatoires, il existe au moins une composante du vecteur $\hat{T}$ dont la moyenne n'est pas nulle. Inversement, si aucun signal de télécommunications n'est présent sur la bande de fréquences, toutes les composantes du vecteur $\hat{T}$ ont une moyenne nulle.

Dans une troisième phase, on détermine s'il existe au moins une composante du vecteur $\hat{T}$ ayant une moyenne non nulle.

Pour cela, dans un premier temps, à l'étape 15, on détermine les éléments de corrélation entre les $m$ composantes du vecteur $\hat{T}$ en calculant la matrice de covariance Q telle que :

$$Q = \left[ q_{ij} \right]_{i,j=1}^{m}$$

avec

$$q_{ij} = \text{cov}\left\{ \hat{T}(\tau_i), \hat{T}(\tau_j) \right\}.$$

où :

- $i$ et $j$, avec $1 \leq i, j \leq m$ représentent les indices respectifs de deux temps de décalage $\tau_i$, $\tau_j$ par rapport à l'instant $n$ de réception du signal $r(n)$
- $m$ représente le nombre total de temps de décalage.

Dans un mode particulier de réalisation de l'invention, la covariance entre deux composantes du vecteur $\hat{T}$ peut être obtenue de la façon suivante :

$$\text{cov}\left\{ \hat{T}(\tau), \hat{T}(\rho) \right\} = \frac{1}{N} \text{Re}\left\{ S_{f_{\tau,\rho}}(0) \right\}$$

dans lequel, $S_{f_{\tau,\rho}}(\alpha)$ est le spectre croisé (en anglais, cross-spectrum) de $f_\tau(n) = \frac{1}{N} y_\tau(n) z_\tau(n)$ et de

$$f_\rho(n) = \frac{1}{N}\, y_\rho(n) z_\rho(n) \quad \text{et où :}$$

- Re représente la partie réelle de l'expression considérée,
- N correspond au nombre d'échantillons du signal.

Dans un deuxième temps, à l'étape 16, on calcule l'indicateur statistique $\ell$ représentatif de la moyenne des $m$ composantes du vecteur $\hat{T}$. L'indicateur statistique $\ell$ résulte du produit du vecteur d'énergie $\hat{T}$ par l'inverse de la matrice de covariance Q et par la transposée du vecteur $\hat{T}$ soit :

$$\ell = \hat{T} Q^{-1} \hat{T}'$$

où :

- $Q^{-1}$ est la matrice inverse de Q
- $\hat{T}^t$ est le vecteur transposé du vecteur $\hat{T}$.

L'indicateur statistique $\ell$ suit une loi dite chi-deux ($\chi^2$) qui peut être centrée ou non centrée. Si le signal reçu n'est pas cyclostationnaire, l'indicateur statistique $\ell$ suit une loi dite chi-deux centrée. Inversement, si le signal reçu est cyclostationnaire, l'indicateur statistique $\ell$ suit une loi dite chi-deux non centrée.

A partir de la table de la loi dite chi-deux centrée, on détermine un seuil $\xi$ tel que $P_{fa}$ =Prob$\{\chi^2 \geq \xi\}$ correspond à une probabilité de fausse alarme, autrement dit à la détermination de la présence d'un signal de télécommunications sur la bande de fréquences considérée alors qu'il n'y en a pas.

A l'étape 17 de comparaison, si l'indicateur statistique $\ell$ est supérieur ou égal à $\xi$ ($\ell \geq \xi$), on considère alors qu'il suit une loi dite chi-deux non centrée. Dans ce cas, il existe au moins un signal de télécommunications sur la bande de fréquences étudiée et donc celle-ci est considérée comme occupée.

Si l'indicateur statistique $\ell$ est strictement inférieur à $\xi$ ($\ell < \xi$) ), on considère alors qu'il suit une loi dite chi-deux centrée. Dans ce cas, la bande de fréquences étudiée est considérée comme libre.

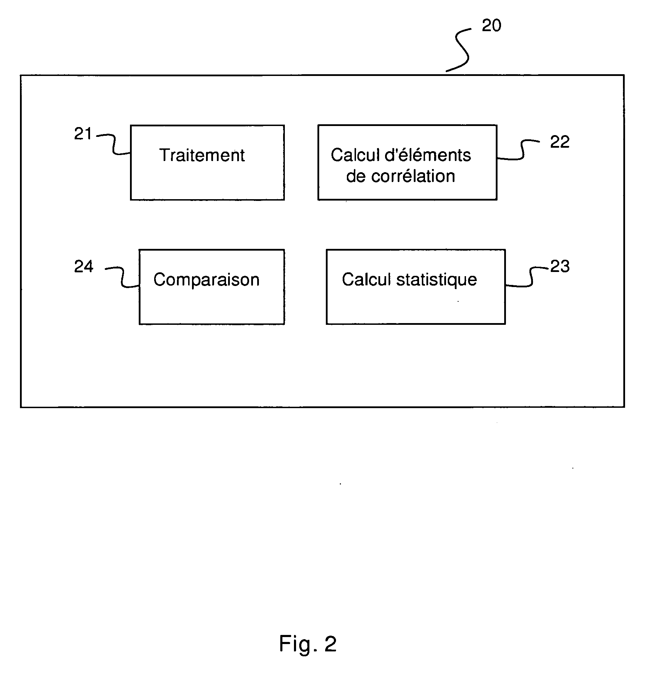

La figure 2 illustre un dispositif 20 de détermination de la présence d'un signal de télécommunications sur une bande de fréquences.

Ce dispositif comprend un module 21 de traitement adapté pour déterminer un vecteur d'énergie $\hat{T}$ comportant $m$ composantes respectivement représentatives de valeurs d'énergie d'une fonction d'autocorrélation du signal reçu sur ladite bande de fréquences pour $m$ temps de décalage.

Ce module de traitement reçoit le signal $r(t)$ qui est échantillonné pour obtenir $N$ échantillons $r(n)$ correspondant chacun à un instant $n$. Le module de traitement 21 permet également de recueillir les valeurs $r(n + \tau)$ pour $m$ temps de décalage $\tau$ par rapport à l'instant $n$. A partir des échantillons du signal reçu, le module de traitement 21 met en oeuvre les étapes 11, 12, 13 et 14 décrites précédemment. Ainsi, le module de traitement 21, détermine un premier vecteur instantané Y($n$), un filtre $h(n)$ et un second vecteur instantané Z$(n)$ puis calcule à partir des différents éléments obtenus un vecteur d'énergie $\hat{T}$.

Il comprend également une unité 22 de calcul d'éléments de corrélation entre les $m$ composantes du vecteur d'énergie $\hat{T}$. L'unité de calcul 22 permet de calculer la matrice de covariance Q représentative des différents éléments de corrélation entre les $m$ composantes du vecteur $\hat{T}$ tel que précédemment décrit à l'étape 15.

Ce dispositif comprend aussi une unité 23 de calcul statistique sur les éléments de corrélation calculés afin de déterminer un indicateur statistique $\ell$.

En référence à l'étape 16 du procédé précédemment décrit, l'unité de calcul 23 calcule l'indicateur statistique $\ell$ représentatif de la moyenne des m composantes du vecteur $\hat{T}$.

Le dispositif comprend également un module 24 de comparaison de l'indicateur statistique obtenu avec un seuil prédéterminé dans le but de déterminer la présence d'un signal de télécommunications sur ladite bande de fréquences. Le module 24 reçoit l'indicateur statistique $\ell$ qu'il compare à un seuil prédéterminé $\xi$, tel que cela est décrit en référence à l'étape 17. Le module 24 délivre en sortie l'indication de présence ou d'absence d'un signal de télécommunications sur la bande de fréquences.

Le dispositif 20 comprend en outre une unité centrale de commande, non représentée, connectée à chacun des modules 21 à 24 et adaptée pour commander leur fonctionnement.

Les modules 21 à 24 peuvent être des modules logiciels formant un programme d'ordinateur. L'invention concerne donc également un programme d'ordinateur pour un dispositif de détermination de la présence d'un signal de télécommunications sur une bande de fréquences comprenant des instructions logicielles pour faire exécuter le procédé précédemment décrit par le dispositif. Le module logiciel peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

Le dispositif 20 de détermination de la présence d'un signal de télécommunications sur une bande de fréquences peut être intégré dans un équipement de communication radio à travers un réseau, par exemple un terminal mobile ou une entité radio du réseau. L'invention concerne aussi un tel équipement.

Dans la description qui précède, chacune des $m$ composantes du vecteur d'énergie $\hat{T}$, déterminée pour un temps de décalage $\tau$ par rapport à l'instant n de réception du signal $r(n)$, avec $n$ appartenant à l'intervalle [0, N-1], est obtenue en prenant la moyenne des $N$ valeurs résultant du produit de la valeur de la composante du premier vecteur instantané $Y(n)$ à l'instant $n$ avec la valeur de la composante du second vecteur instantané $Z(n)$ au même instant $n$. Dans un autre mode de réalisation de l'invention, chacune des $m$ composantes du vecteur d'énergie $\hat{T}$, est obtenue en prenant la moyenne des $N$ valeurs résultant du carré de la valeur de la composante du second vecteur instantané $Z(n)$ à l'instant $n$. Dans ce mode de réalisation, le second vecteur instantané $Z(n)$ est aussi obtenu par application d'un filtre au premier vecteur instantané $Y(n)$. Ce mode de réalisation permet de simplifier le module 21 de traitement du dispositif 20 de détermination de la présence d'un signal de télécommunications sur une bande de fréquences pour effectuer la fonction de calcul du vecteur d'énergie $\hat{T}$.

Dans un autre mode de réalisation, le calcul de l'indicateur statistique $\ell$ représentatif de la moyenne des m composantes du vecteur d'énergie $\hat{T}$ est réalisé à partir de la matrice de covariance Q dont on n'a conservé que les composantes de la diagonale.

Soit alors dans ce mode de réalisation l'indicateur statistique $\ell$ :

$$\ell = \sum_{i=1}^{m} \frac{\left(\hat{T}(\tau_i)\right)^2}{q_{ii}}$$

avec

$$q_{ii} = \mathrm{cov}\left\{\hat{T}(\tau_i), \hat{T}(\tau_i)\right\}$$

où :

- $i$, avec $1 \le i \le m$ représente l'indice d'un temps de décalage $\tau_i$ par rapport à l'instant $n$ de réception du signal $r(n)$
- $m$ représente le nombre total de temps de décalage.

Ce mode de réalisation permet un calcul simplifié et plus rapide de l'indicateur statistique $\ell$.

## Revendications

1. Procédé de détermination de la présence d'un signal de télécommunications sur une bande de fréquences, ledit signal étant supposé cyclostationnaire, **caractérisé en ce qu'**il comporte des étapes de :

   /a/ détermination d'un vecteur d'énergie $\hat{T}$ (14) comportant $m$ composantes respectivement représentatives de valeurs d'énergie d'une fonction d'autocorrélation du signal reçu sur ladite bande de fréquences pour m temps de décalage,
   /b/ calcul d'éléments de corrélation (15) entre les $m$ composantes du vecteur d'énergie $\hat{T}$,
   /c/ réalisation d'un calcul statistique (16) sur les éléments de corrélation calculés afin de déterminer un indicateur statistique $\ell$,
   /d/ comparaison (17) de l'indicateur statistique obtenu $\ell$ avec un seuil prédéterminé dans le but de déterminer la présence d'un signal de télécommunications sur ladite bande de fréquences.

2. Procédé selon la revendication 1, **caractérisé en ce que** l'étape /a/ de détermination du vecteur d'énergie $\hat{T}$

comporte au moins une sous-étape (11) de calcul d'un premier vecteur à *m* composantes *Y(n)*, une composante d'ordre n du vecteur résultant du produit de la valeur du signal reçu à un instant donné *n* avec la valeur du signal reçu à un instant décalé *n* + τ.

**3.** Procédé selon la revendication 2, **caractérisé en ce que** l'étape /a/ de détermination du vecteur d'énergie $\hat{T}$ comporte au moins

- une sous-étape (12) de détermination d'une fonction de filtrage *h(n)* dont les coefficients sont obtenus à partir de fréquences α min et α max prédéterminées;
- une sous-étape (13) de calcul d'un second vecteur *Z(n)* à *m* composantes résultant du produit de convolution de la fonction de filtrage *h(n)* avec le premier vecteur *Y(n)*.

**4.** Procédé selon la revendication 3, **caractérisé en ce que** les *m* composantes du vecteur $\hat{T}$ sont fonction de la somme pour toutes les valeurs de *n* du produit de la valeur de la composante du vecteur *Y(n)* à l'instant *n* avec la valeur de la composante du vecteur *Z(n)* au même instant *n*.

**5.** Procédé selon l'une quelconque des revendications 1 à 4, **caractérisé en ce que** l'étape /b/ de calcul des éléments de corrélation entre les *m* composantes du vecteur d'énergie $\hat{T}$ s'effectue par la détermination d'une matrice de covariance *Q* dont les éléments correspondent à la covariance entre chacune des composantes du vecteur d'énergie $\hat{T}$ prises deux à deux.

**6.** Procédé selon l'une quelconque des revendications 1 à 5, **caractérisé en ce que** l'indicateur statistique ℓ est obtenu à partir du vecteur d'énergie $\hat{T}$ et de la matrice de covariance *Q*.

**7.** Procédé selon la revendication 6, **caractérisé en ce que** l'indicateur statistique ℓ résulte du produit du vecteur d'énergie $\hat{T}$ par l'inverse de la matrice de covariance *Q* et par la transposée du vecteur $\hat{T}$.

**8.** Procédé selon l'une quelconque des revendications 1 à 7, **caractérisé en ce que** l'indicateur statistique ℓ suit une loi dite chi-deux $\chi^2$.

**9.** Procédé selon la revendication 8, dans lequel le seuil auquel l'indicateur statistique est comparé est déterminé à partir de la loi de chi-deux $\chi^2$ centrée.

**10.** Dispositif (20) de détermination de la présence d'un signal de télécommunications sur une bande de fréquences, ledit signal étant supposé cyclostationnaire, **caractérisé en ce qu'**il comporte :

- un module (21) de traitement adapté pour déterminer un vecteur d'énergie $\hat{T}$ comportant *m* composantes respectivement représentatives de valeurs d'énergie d'une fonction d'autocorrélation du signal reçu sur ladite bande de fréquences pour *m* temps de décalage,
- une unité (22) de calcul d'éléments de corrélation entre les *m* composantes du vecteur d'énergie $\hat{T}$,
- une unité (23) de calcul statistique sur les éléments de corrélation calculés afin de déterminer un indicateur statistique ℓ,
- un module (24) de comparaison de l'indicateur statistique obtenu ℓ avec un seuil prédéterminé dans le but de déterminer la présence d'un signal de télécommunications sur ladite bande de fréquences.

**11.** Equipement de communication à travers un réseau comprenant un dispositif de détermination de la présence d'un signal de télécommunications sur une bande de fréquences, ledit signal étant supposé cyclostationnaire, selon la revendication 10.

**12.** Programme d'ordinateur comportant des instructions pour mettre en oeuvre le procédé selon l'une quelconque des revendications 1 à 9 lorsque le programme est exécuté par un ordinateur.

**Claims**

**1.** Method for determining the presence of a telecommunications signal on a frequency band, said signal being assumed cyclostationary, **characterized in that** it comprises steps of:

/a/ determining an energy vector $\hat{T}$ (14) comprising *m* components respectively representative of energy values of an autocorrelation function of the signal received on said frequency band for *m* shift times,
/b/ calculating correlation elements (15) between the *m* components of the energy vector $\hat{T}$,
/c/ performing a statistical calculation (16) on the calculated correlation elements so as to determine a statistical indicator $\ell$,
/d/ comparing (17) the statistical indicator obtained $\ell$ with a predetermined threshold with the aim of determining the presence of a telecommunications signal on said frequency band.

2. Method according to Claim 1, **characterized in that** step /a/ of determining the energy vector $\hat{T}$ comprises at least one sub-step (11) of calculating a first vector with *m* components $Y(n)$, a component of order n of the vector resulting from the product of the value of the signal received at a given instant *n* with the value of the signal received at a shifted instant $n + \tau$.

3. Method according to Claim 2, **characterized in that** step /a/ of determining the energy vector $\hat{T}$ comprises at least

   - a sub-step (12) of determining a filtering function *h(n)* whose coefficients are obtained on the basis of predetermined frequencies $\alpha$min and $\alpha$max;
   - a sub-step (13) of calculating a second vector *Z(n)* with *m* components resulting from the convolution product of the filtering function *h (n)* with the first vector *Y(n)*.

4. Method according to Claim 3, **characterized in that** the *m* components of the vector $\hat{T}$ are dependent on the sum for all the values of *n* of the product of the value of the component of the vector *Y(n)* at the instant *n* with the value of the component of the vector *Z(n)* at the same instant *n*.

5. Method according to any one of Claims 1 to 4, **characterized in that** step /b/ of calculating the correlation elements between the *m* components of the energy vector $\hat{T}$ is performed by determining a covariance matrix *Q* whose elements correspond to the covariance between each of the components of the energy vector $\hat{T}$, taken pairwise.

6. Method according to any one of Claims 1 to 5, **characterized in that** the statistical indicator $\ell$ is obtained on the basis of the energy vector $\hat{T}$ and of the covariance matrix *Q*.

7. Method according to Claim 6, **characterized in that** the statistical indicator $\ell$ results from the product of the energy vector $\hat{T}$ times the inverse of the covariance matrix *Q* and times the transpose of the vector $\hat{T}$.

8. Method according to any one of Claims 1 to 7, **characterized in that** the statistical indicator $\ell$ follows a so-called chi-square law $\chi^2$.

9. Method according to Claim 8, in which the threshold with which the statistical indicator is compared is determined on the basis of the centred chi-square law $\chi^2$.

10. Device (20) for determining the presence of a telecommunications signal on a frequency band, said signal being assumed cyclostationary, **characterized in that** it comprises:

    - a processing module (21) adapted for determining an energy vector $\hat{T}$ comprising *m* components respectively representative of energy values of an autocorrelation function of the signal received on said frequency band for *m* shift times,
    - a unit (22) for calculating correlation elements between the *m* components of the energy vector $\hat{T}$,
    - a unit (23) for statistical calculation on the calculated correlation elements so as to determine a statistical indicator $\ell$,
    - a module (24) for comparing the statistical indicator obtained $\ell$ with a predetermined threshold with the aim of determining the presence of a telecommunications signal on said frequency band.

11. Equipment for communication across a network comprising a device for determining the presence of a telecommunications signal on a frequency band, said signal being assumed cyclostationary, according to Claim 10.

12. Computer program comprising instructions for implementing the method according to any one of Claims 1 to 9 when the program is executed by a computer.

**EP 2 119 063 B1**

**Patentansprüche**

1.  Verfahren zur Bestimmung des Vorhandenseins eines Telekommunikationssignals in einem Frequenzband, wobei angenommen wird, dass das Signal cyclostationär ist, **dadurch gekennzeichnet, dass** es die folgenden Schritte aufweist :

    /a/ Bestimmung eines Energievektors $\hat{T}$ (14), der m Komponenten aufweist, die je für Energiewerte einer Autokorrelationsfunktion des in dem Frequenzband empfangenen Signals für m Verzögerungszeiten repräsentativ sind,
    /b/ Berechnung von Korrelationselementen (15) zwischen den m Komponenten des Energievektors T,
    /c/ Durchführung einer statistischen Berechnung (16) an den berechneten Korrelationselementen, um einen statistischen Indikators $\ell$ zu bestimmen,
    /d/ Vergleich (17) des erhaltenen statistischen Indikators $\ell$ mit einer vorbestimmten Schwelle, um das Vorhandensein eines Telekommunikationssignals in dem Frequenzband zu bestimmen.

2.  Verfahren nach Anspruch 1, **dadurch gekennzeichnet, dass** der Schritt /a/ der Bestimmung des Energievektors $\hat{T}$ mindestens einen Unterschritt (11) der Berechnung eines ersten Vektors mit m Komponenten Y(n) aufweist, wobei eine Komponente der Größe n des Vektors aus dem Produkt des Werts des zu einem gegebenen Zeitpunkt n empfangenen Signals und dem Wert des zu einem verzögerten Zeitpunkt n+τ empfangenen Signals resultiert.

3.  Verfahren nach Anspruch 2, **dadurch gekennzeichnet, dass** der Schritt /a/ der Bestimmung des Energievektors $\hat{T}$ mindestens aufweist

    - einen Unterschritt (12) der Bestimmung einer Filterfunktion h(n), deren Koeffizienten ausgehend von vorbestimmten Frequenzen αmin und αmax erhalten werden;
    - einen Unterschritt (13) der Berechnung eines zweiten Vektors Z(n) mit m Komponenten, der aus dem Konvolutionsprodukt der Filterfunktion h(n) mit dem ersten Vektor Y(n) resultiert.

4.  Verfahren nach Anspruch 3, **dadurch gekennzeichnet, dass** die m Komponenten des Vektors $\hat{T}$ eine Funktion der Summe für alle Werte von n des Produkts aus dem Wert der Komponente des Vektors Y(n) zum Zeitpunkt n und dem Wert der Komponente des Vektors Z(n) zum gleichen Zeitpunkt n sind.

5.  Verfahren nach einem der Ansprüche 1 bis 4, **dadurch gekennzeichnet, dass** der Schritt /b/ der Berechnung der Korrelationselemente zwischen den m Komponenten des Energievektors $\hat{T}$ durch die Bestimmung einer Kovarianzmatrix Q durchgeführt wird, deren Elemente der Kovarianz zwischen jeder der paarweise genommenen Komponenten des Energievektors $\hat{T}$ entsprechen.

6.  Verfahren nach einem der Ansprüche 1 bis 5, **dadurch gekennzeichnet, dass** der statistische Indikators $\ell$ ausgehend vom Energievektor $\hat{T}$ und von der Kovarianzmatrix Q erhalten wird.

7.  Verfahren nach Anspruch 6, **dadurch gekennzeichnet, dass** der statistische Indikators $\ell$ aus dem Produkt des Energievektors $\hat{T}$ mit dem Umkehrwert der Kovarianzmatrix Q und mit der Transponierten des Vektors $\hat{T}$ erhalten wird.

8.  Verfahren nach einem der Ansprüche 1 bis 7, **dadurch gekennzeichnet, dass** der statistische Indikator $\ell$ einem so genannten Chi-Quadrat-Gesetz $\chi^2$ folgt.

9.  Verfahren nach Anspruch 8, **dadurch gekennzeichnet, dass** die Schwelle, mit der der statistische Indikator verglichen wird, ausgehend von dem zentrierten Chi-Quadrat-Gesetz $\chi^2$ bestimmt wird.

10. Vorrichtung (20) zur Bestimmung des Vorhandenseins eines Telekommunikationssignals in einem Frequenzband, wobei angenommen wird, dass das Signal cyclostationär ist, **dadurch gekennzeichnet, dass** sie aufweist :

    - ein Verarbeitungsmodul (21), das geeignet ist, um einen Energievektor $\hat{T}$ zu bestimmen, der m Komponenten aufweist, die je für Energiewerte einer Autokorrelationsfunktion des in dem Frequenzband empfangenen Signals für m Verzögerungszeiten repräsentativ sind,
    - eine Einheit (22) zur Berechnung von Korrelationselementen zwischen den m Komponenten des Energievektors $\hat{T}$,
    - eine Einheit (23) zur statistischen Berechnung an den berechneten Korrelationselementen, um einen statisti-

schen Indikator $\ell$ zu bestimmen,

- ein Modul (24) zum Vergleich des erhaltenen statistischen Indikators $\ell$ mit einer vorbestimmten Schwelle, um das Vorhandensein eines Telekommunikationssignals in dem Frequenzband zu bestimmen.

11. Ausstattung zur Kommunikation über ein Netzwerk, die eine Vorrichtung zur Bestimmung des Vorhandenseins eines Telekommunikationssignals in einem Frequenzband enthält, wobei angenommen wird, dass das Signal cyclostationär ist, nach Anspruch 10.

12. Computerprogramm, das Anweisungen aufweist, um das Verfahren nach einem der Ansprüche 1 bis 9 durchzuführen, wenn das Programm von einem Computer ausgeführt wird.

10 — Réception du signal

11 — Détermination du vecteur Y(n)

12 — Détermination du filtre

13 — Détermination du vecteur Z(n)

14 — Calcul du vecteur d'énergie

15 — Calcul de la matrice de covariance

16 — Calcul de l'indicateur statistique

17 — Comparaison

Fig. 1

20

| 21 | Traitement | | Calcul d'éléments de corrélation | 22 |

| 24 | Comparaison | | Calcul statistique | 23 |

Fig. 2

**EP 2 119 063 B1**

**Documents brevets cités dans la description**

- EP 20413361 A
- US 2004190663 A
- WO 0211378 A